# EUROPÄISCHE PATENTSCHRIFT

(11) **EP 2 488 384 B1**
(45) Veröffentlichungstag und Bekanntmachung des Hinweises auf die Patenterteilung: **03.04.2019**
(21) Anmeldenummer: 10726894.8
(22) Anmeldetag: 10.05.2010
(51) Int. Cl.: B60L 5/19

(54) **STROMABNEHMER**
Current collector
Prise de courant

(30) Priorität: 13.10.2009 EP 09012946
(43) Veröffentlichungstag der Anmeldung: 22.08.2012
(73) Patentinhaber: Stemmann-Technik GmbH, 48465 Schüttorf (DE); Bombardier Transportation GmbH, 10785 Berlin (DE)
(72) Erfinder: HENGSTERMANN, Thomas, 48432 Rheine (DE); ÜTRECHT, Werner, 48465 Schüttorf (DE)
(74) Vertreter: Griepenstroh, Jörg
(86) Internationale Anmeldenummer: PCT/EP2010/002883
(87) Internationale Veröffentlichungsnummer: WO 2011/044963

(56) Entgegenhaltungen:
- DE-A1- 19 914 566
- DE-C- 353 196
- DE-C1- 19 601 009
- DE-U1- 9 304 251
- DE-U1- 29 601 731
- FR-A- 1 193 020
- FR-A1- 2 477 989

## Beschreibung

Die Erfindung betrifft einen Stromabnehmer für ein Schienenfahrzeug zur Kontaktierung mit einem Fahrdraht einer Oberleitung.

Derartige Stromabnehmer dienen zur Übertragung elektrischer Energie von einer fest montierten, Strom führenden Oberleitung zu elektrischen Komponenten des angetriebenen Fahrzeugs. Solche Stromabnehmer finden sich nicht nur an Schienenfahrzeugen, sondern auch an Oberleitungsbussen. Bei den Stromabnehmern sind so genannte Scheren- oder Pantografenstromabnehmer und Einholmstromabnehmer zu unterscheiden. Bei moderneren Schienenfahrzeugen kommt auf Grund seiner leichteren Bauweise in der Regel der Einholmstromabnehmer zum Einsatz.

Die Höhenverstellung der Stromabnehmer erfolgt elektrisch, hydraulisch oder pneumatisch gegenüber dem fahrzeugseitigen Grundrahmen des Stromabnehmers. Auf dem Grundrahmen ist ein Stangenwerk, bestehend aus Unterarm, Lenkerstange und Oberarm, und an diesem eine Stromabnehmerwippe mit einer Schleifleistenanordnung zur Kontaktierung mit dem Fahrdraht der Oberleitung angeordnet. In Abhängigkeit von der Spannung und den zu übertragenden Stromstärken können eine oder mehrere Schleifleisten vorgesehen sein.

Ein wesentliches Element der Stromabnehmerwippe ist eine quer zur Fahrtrichtung verlaufende Bügelanordnung, die endseitig Auflaufhörner aufweist. Diese sind nach unten, d.h. vom Fahrdraht weg und zum Schienenfahrzeug hin, gebogen. Mittels der Auflaufhörner wird verhindert, dass sich der Stromabnehmer an der Oberleitung verhakt, wenn die Oberleitung durch seitliche Auslenkung den Schleifleistenbereich verlassen sollte.

Auf Grund unterschiedlicher Stromübertragungssysteme sind auch unterschiedliche Breiten der Stromabnehmerwippen erforderlich. In Frankreich beträgt die erforderliche Breite beispielsweise 1.450 mm, wohingegen in Deutschland eine Wippenbreite von 1.950 mm verlangt wird. Es gibt auch weitere Standards mit Breiten von 1.600 und 1.800 mm. Im grenzüberschreitenden Verkehr waren Schienenfahrzeuge daher mit unterschiedlichen Stromabnehmern für die jeweiligen Stromübertragungssysteme auszustatten.

Die DE 199 14 566 A1 schlägt aus diesem Grund einen Stromabnehmer für Mehrsystemschienenfahrzeuge vor, bei welchen zwei separate, in Längsrichtung des Fahrzeugs voneinander beabstandete und quer zu ihm verlaufende Bügel mit je einem seitlichen Auflaufhorn an einer Wippe angeordnet sind, wobei die beiden Auflaufhörner zu entgegengesetzten Seiten des Fahrzeugs weisen. Die Bügel und damit die beiden Auflaufhörner sind mittels je einer hydraulischen oder pneumatischen Stelleinrichtung gegensätzlich zueinander quer zur Fahrtrichtung verschiebbar. Zusätzlich sind zwei in Längsrichtung des Fahrzeugs zueinander beabstandete, in der Wippe angeordnete Schleifleisten durch je eine weitere hydraulische oder pneumatische Stelleinrichtung gegensätzlich zueinander quer zur Fahrtrichtung verschiebbar. Auf diese Weise erfolgt die Anpassung an verschiedene Breiten der Stromübertragungssysteme. Es wird als nachteilig angesehen, dass mehrere quer zur Längsrichtung des Fahrzeugs im Abstand zueinander verlaufende Bügel vorgesehen sind, durch welche die Stromabnehmerwippe schwerer wird, wobei das zusätzliche Gewicht auch auf die erforderlichen zusätzlichen pneumatischen oder hydraulischen Stelleinrichtungen zurückzuführen ist.

Zum Stand der Technik ist die DE 93 04 251 U1 zu nennen, betreffend einen Stromabnehmer für ein gleisgebundenes Fahrzeug, bei welchem die Wippe zumindest ein feststehendes Schleifstück sowie ein zu diesen verstellbares Schleifstück mit Schleifstückabschnitten sowie endseitigen Auflaufhörnern umfasst. Die Schleifstückabschnitte können auseinander gefahren werden, um die Arbeitsbreite des Stromabnehmers zu vergrößern.

Aus der FR 2 477 989 A1 ist ebenfalls ein Stromabnehmer mit einer in der Breite verstellbaren Wippe bekannt. Die Breite des Schleifbügels des Stromabnehmers ist derart selbsttätig veränderbar, dass bei niedrig eingefahrenem Stromabnehmer der Schleifbügel schmal und bei hohem Stromabnehmer breit ist.

Schließlich ist noch die DE 296 017 31 U1 zum Stand der Technik zu nennen, welche bei einem Stromabnehmer vorschlägt, dass die beiden gegenüberliegenden Endhörner der Schleifleiste in ihrem Abstand zueinander und/oder die Schleifleisten in ihrer Länge einstellbar sind.Die DE 353 196 C offenbart einen Stromabnehmer für elektrische Fahrzeuge, insbesondere für Strecken mit Tunnelanlagen. Der Stromabnehmer ist in der Breite veränderlich und besitzt wenigstens eine Schleifleiste und eine Stelleinrichtung mit einer Kolbenzylindereinheit. Die Schleifleiste besitzt ihren gegenüberliegenden Enden zugeordnete Schleifleistenauflaufhörner, welche gegenüber einem Schleifleistenmittelteil der wenigstens einen Schleifleiste in entgegengesetzte Richtungen verstellbar sind.

Die FR 1 193 020 A offenbart einen Stromabnehmer verstellbarer Breite, wobei die Breitenverstellung über die entgegengesetzte Schwenkbewegung zweier Schleifleisten mit endseitigen Schleifleistenauflaufhörnern erfolgt.

Die DE 196 01 009 C1 offenbart einen Stromabnehmer für gleisgebundene Fahrzeuge, bei welchem die Wippe seitenbeschleunigungsabhängig, seitenverstellbar ist. Der Wippenträger ist seitenverschieblich gelagert. Da nur die Wippe in Längsrichtung des Fahrzeugs seitenverstellbar ist, müssen keine großen Massen verstellt werden. Die Wippe allein und nicht der Stromabnehmer als Ganzes ist seitenverstellbar, um auch im Kurvenbereich sicherzustellen, dass die Schleifstücke an den weiterhin im Wesentlichen im Mittelbereich oberhalb der Gleise gespannten Fahrleitungen anliegen. Eine Breitenverstellung ist nicht möglich.

Der Erfindung liegt hiervon ausgehend die Aufgabe zu Grunde, einen breitenverstellbaren Stromabnehmer in kompakterer Bauweise aufzuzeigen.

Diese Aufgabe ist bei einem Stromabnehmer mit den Merkmalen des Patentanspruchs 1 gelöst.

Die Unteransprüche betreffen vorteilhafte Weiterbildungen des Erfindungsgedankens.

Der erfindungsgemäße Stromabnehmer umfasst eine in ihrer Breite veränderliche Stromabnehmerwippe mit wenigstens einer Schleifleiste und einer Bügelanordnung. Die Bügelanordnung umfasst einen Bügel mit Auflaufhörnern an seinen Enden. Die Auflaufhörner sind mittels einer Stelleinrichtung in entgegengesetzte Richtungen und quer zur Fahrtrichtung verschiebbar. Die Stelleinrichtung wird von wenigstens einer als Differenzialkolben ausgeführten, doppelt wirkenden Kolben-Zylinder-Einheit oder wenigstens einer elektromechanischen Antriebseinheit gebildet. Der Vorteil dieser Anordnung ist darin zu sehen, dass die beiden Auflaufhörner entlang einer gemeinsamen Achse, d.h. entlang des gemeinsamen Bügels, in zueinander entgegengesetzte Richtungen verschiebbar sind. Das ermöglicht eine kompaktere und damit auch leichtere Bauweise des Stromabnehmers. Ein solcher Stromabnehmer ist für unterschiedlich breite Stromübertragungssysteme einsetzbar, indem die Stelleinrichtung die Auflaufhörner verlagert und somit den Stromabnehmer an das jeweilige Stromübertragungssystem anpasst. Je nach Ausgestaltung der Kolben-Zylinder-Einheiten ist eine Anpassung an mindestens zwei verschieden breite Stromübertragungssysteme möglich.

Der erfindungsgemäße Stromabnehmer ist insbesondere mit einer Stelleinrichtung versehen, die von wenigstens einer als Differenzialkolben ausgeführten, doppelt wirkenden Kolben-Zylinder-Einheit gebildet wird. Diese wird mittels Fluiddruck angetrieben. Es kann sich um einen hydraulischen oder pneumatischen Druck handeln. Die aus dem Fluiddruck resultierende Kraft dient sowohl zum Ausfahren als auch zum Einfahren der Auflaufhörner. Zusätzliche Rückstellmittel sind prinzipiell nicht erforderlich. Es ist auch denkbar z.B. pneumatische Motoren mit ein oder beidseitig wirkender Spindel als Stelleinrichtungen vorzusehen.

Es gibt eine Reihe von Möglichkeiten, wie derartige Kolben-Zylinder-Einheiten angesteuert oder auch angeordnet werden. Denkbar ist beispielsweise, dass jedem Auflaufhorn eine eigene Kolben-Zylinder-Einheit oder auch eine elektromechanische Antriebseinheit zugeordnet ist. Dies ermöglicht eine individuelle Betätigung der einzelnen Auflaufhörner. Generell wird angestrebt, dass sich beide Auflaufhörner synchron von der einen in die andere Betriebsstellung verlagern. Es ist im Rahmen der Erfindung daher auch möglich, dass die Verstellung der Auflaufhörner mittels einer in beiden Auflaufhörnern gemeinsamen Stelleinrichtung erfolgt. Eine solche gemeinsame Stelleinrichtung kann beispielsweise auch in Form eines Gewindetriebs ausgeführt sein. Beispielsweise kann eine angetriebene Gewindespindel dem Bügel zugeordnet sein, während mit der Gewindespindel in Eingriff stehende Spindelmuttern den Auflaufhörnern zugeordnet sind und auf Grund entgegengesetzter Gewindesteigungen in entgegengesetzte Richtungen verlagert werden, wenn sich die Gewindespindel dreht. Der Antrieb kann durch einen pneumatischen Motor erfolgen. Die Gewindespindel kann ein- oder beidseitig wirkend ausgeführt sein.

Wenn besonders große Hubwege oder auch eine Anpassung an mehr als zwei unterschiedliche Breiten der Stromabnehmersysteme gewünscht wird, ist es denkbar, mehrere Kolben-Zylinder-Einheiten in einer Reihenschaltung anzuordnen. Beispielsweise ist es denkbar, einem Auflaufhorn sowohl eine äußere Kolben-Zylinder-Einheit also auch eine innere, d.h. im größeren Abstand zum Auflaufhorn liegende, Kolben-Zylinder-Einheit zuzuordnen. Wenn eine der Kolben-Zylinder-Einheiten druckbeaufschlagt wird, fährt ein Kolben, der mit einer Kolbenstange verbunden ist, aus und das Auflaufhorn wird in eine erste Betriebsstellung verlagert. Wird auch die zweite Kolben-Zylinder-Einheit druckbeaufschlagt, fährt das Auflaufhorn noch weiter aus und kann in eine zweite Betriebsstellung verlagert werden. Bei unterschiedlich langen Hubwegen ist auch noch eine weitere Betriebsstellung möglich, je nachdem, ob die Kolben-Zylinder-Einheit mit dem längeren oder diejenige mit dem kürzeren Hubweg zuerst druckbeaufschlagt wird.

Es ist mit der Erfindung auch möglich, nicht nur die Auflaufhörner relativ zueinander zu verlagern, sondern auch die wenigstens eine Schleifleiste in ihrer Breite an verschieden breite Stromübertragungssysteme anzupassen. Hierzu weist die wenigstens eine Schleifleiste ihren gegenüberliegenden Enden zugeordnete Schleifleistenauflaufhörner auf, welche gegenüber einem Schleifleistenmittelteil der wenigstens einen Schleifleiste in entgegengesetzte Richtungen verschiebbar sind. Die Schleifleistenauflaufhörner können insbesondere mittels der Stelleinrichtungen für die Auflaufhörner der Bügelanordnung verschoben werden.

Bei dieser Ausführungsform der Erfindung ist mithin eine Breitenverstellung sowohl der Bügelanordnung als auch der wenigstens einen Schleifleiste mittels gemeinsam genutzter Stelleinrichtungen möglich. Es ist denkbar, dass die zu verlagernden Auflaufhörner unmittelbar mit den Schleifleistenauflaufhörnern gekoppelt sind. Je nach Ausführung der Stelleinrichtungen, können diese auch jeweils mit den Auflaufhörnern und mit den Schleifleistenauflaufhörnern in Eingriff stehen, so dass die Auflaufhörner nicht unmittelbar mit den Schleifleistenauflaufhörnern sondern über die Stelleinrichtungen verbunden sind. Bevorzugt werden die auf einer Fahrzeuglängsseite einander zugeordneten Auflaufhörner und Schleifleistenauflaufhörner synchron verlagert.

In vorteilhafter Weiterbildung sind Arretierungsmittel vorgesehen, mittels welcher die Auflaufhörner in einer ausgefahrenen und/oder einer eingefahrenen Betriebsstellung gegenüber dem Bügel festsetzbar sind. Die Arretierungsmittel können elektrisch, magnetisch oder auch fluidisch betätigt sein. Die Arretierungsmittel können unter dem Einfluss eines Rückstellmittels, beispielsweise in Form einer Federkraft, stehen, durch welche die Arretierungsmittel grundsätzlich in einer Arretierungsposition gehalten werden. Nur wenn die Arretierungsmittel gelöst werden sollen, ist eine Einflussnahme über geeignete Stellmittel, die elektrisch, magnetisch oder fluidisch angetrieben werden, erforderlich. Wenn erforderlich lassen sich durch die Arretierungsmittel zusätzliche Betriebsstellungen ergänzen.

Die Verwendung von Arretierungsmitteln hat auch den Vorteil, dass die Kolben-Zylinder-Einheit bei in einer ausgefahrenen und/oder eingefahrenen Betriebsstellung festgesetzten Auflaufhörnern druckfrei geschaltet sein kann. Es ist somit keineswegs erforderlich, dass die Kolben-Zylinder-Einheiten ständig mit Druck beaufschlagt sein müssen. Prinzipiell ist dies nur während der Verlagerung der Auflaufhörner notwendig.

Es ist möglich, die Arretierungsmittel aus Sicherheitsgründen redundant vorzusehen oder auch verschiedene Arretierungsmittel vorzusehen, um sicherzustellen, dass die Auflaufhörner ihre vorgesehene Betriebsstellung nicht bei Versagen beispielsweise eines elektrischen, magnetischen oder fluidischen Systems verändern können, falls eines dieser Systeme ausfallen sollte.

Die Stelleinrichtungen können in den Bügel integriert sein. Dies ist die kompakteste Möglichkeit, die jeweiligen Stelleinrichtungen insbesondere in Form von linear wirkenden Kolben-Zylinder-Einheiten unterzubringen.

Im Rahmen der Erfindung ist es aber auch möglich, die Stelleinheit außerhalb der Bügelanordnung anzuordnen. Prinzipiell kann die Stelleinheit im Bereich der Stromabnehmerwippe angeordnet sein, d.h. zusammen mit der Wippe angehoben oder abgesenkt werden. Denkbar ist es aber auch, die Stelleinheit am Grundrahmen des Stromabnehmers zu platzieren, so dass diese nur dann mit den Auflaufhörnern in einem Wirkzusammenhang steht, wenn der Stromabnehmer abgesenkt ist. Bei dieser Konfiguration sind die Auflaufhörner folglich in der angehobenen Position nicht verstellbar. Daher ist es notwendig, Arretierungsmittel vorzusehen, durch welche die Betriebsstellung der Auflaufhörner gesichert ist. Wenn die Stromabnehmerwippe abgesenkt wird, können die Auflaufhörner mit geeigneten Koppelmitteln der Stelleinrichtung lösbar in Eingriff gelangen. Die Stelleinrichtung selbst kann wiederum hydraulisch, pneumatisch oder elektromechanisch ausgeführt sein und steht mit den Auflaufhörnern nur in abgesenkter Stellung in Kontakt.

Es ist denkbar, dass die die Auflaufhörner in der abgesenkten Stellung nur dann in Kontakt mit den Koppelmitteln kommen, wenn die Auflaufhörner verlagert werden sollen. Hierzu können die Koppelmittel selbst in einer Weise verlagert werden, dass sie nach dem Verstellen der Auflaufhörner wieder in eine Grundstellung gebracht werden, in welcher kein Kontakt zu den Auflaufhörnern besteht. Zum Beispiel könnten die Koppelmittel quer zur Stellrichtung der Auflaufhörner und gleichzeitig quer zur Hubrichtung des Stromabnehmers verlagert werden.

Es ist denkbar, dass die Stelleinrichtung und/oder die Koppelmittel gegenüber dem Stromabnehmer elektrisch isoliert ausgeführt sind.

Der erfindungsgemäße Stromabnehmer ist vorzugsweise mit Mitteln zur Signalisierung der Betriebsstellung versehen. Die Signalerzeugung kann optisch, z.B. durch Lichtschranken, erfolgen, aber auch induktiv, magnetisch oder mechanisch oder durch mechanisch betätigte Ventile (z.B. Grenztaster). Auf diese Weise kann die Stellung der Auflaufhörner an die Fahrzeugsteuerung übermittelt werden.

Die Erfindung wird nachfolgend anhand der in den Figuren 1 bis 7 schematisch dargestellten Ausführungsbeispiele näher erläutert. Es zeigt:
- Figur 1: einen Stromabnehmer für ein Schienenfahrzeug in der ausgefahrenen Position in Frontansicht;
- Figur 2: eine erste Ausführungsform einer Bügelanordnung eines Stromabnehmers mit doppelt wirkender Kolben-Zylinder-Einheit ohne Rückstellfeder;
- Figur 3: eine weitere Ausführungsform einer Bügelanordnung mit hintereinander geschalteten Kolben-Zylinder-Einheiten;
- Figuren 4a bis 4d: vier unterschiedliche Betriebsstellungen ein- und derselben Bügelanordnung bei unterschiedlich betätigten Kolben-Zylinder-Einheiten;
- Figur 5: eine Bügelanordnung mit einer Arretierung;
- Figur 6: eine Bügelanordnung mit einer Arretierung, wobei für das linke und rechte Auflaufhorn jeweils getrennt betätigbare Stelleinrichtungen vorgesehen sind;
- Figur 7: eine Bügelanordnung, bei welcher die Auflaufhörner in Wirkzusammenhang mit Koppelmitteln einer Stelleinheit stehen;
- Figur 8: die Bügelanordnung in gegenüber der Stelleinheit angehobener Position und
- Figuren 9a und 9b: zwei Ansichten einer weiteren Ausführungsform eines Stromabnehmers mit verlagerbaren Schleifleistenauflaufhörnern.

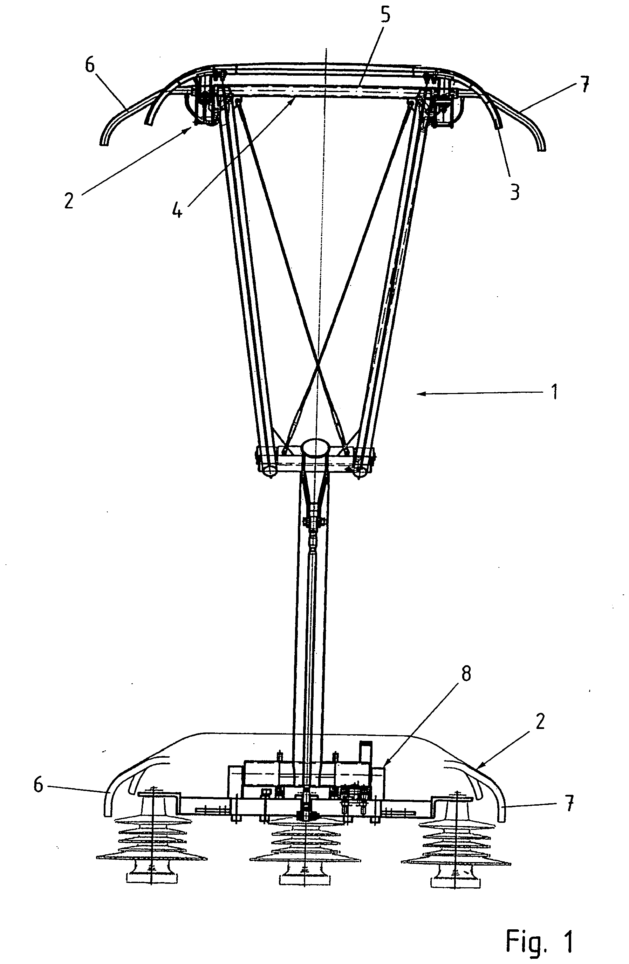

Figur 1 zeigt einen Stromabnehmer für ein nicht näher dargestelltes Schienenfahrzeug. Der Stromabnehmer 1 dient zur Kontaktierung eines Fahrdrahts einer Oberleitung. Der Stromabnehmer 1 ist ein Einholmstromabnehmer, der an seinem oberen Ende eine Stromabnehmerwippe 2 mit einer Schleifleiste 3 und einer Bügelanordnung 4 aufweist. Bei dieser Ausführungsform sind zwei Schleifleisten 3 vorgesehen, wobei sich zwischen den beiden Schleifleisten 3 die Bügelanordnung 4 befindet. Die Bügelanordnung 4 umfasst einen Mittelteil, der nachfolgend als Bügel 5 bezeichnet wird sowie endseitige Auflaufhörner 6, 7.

Figur 1 lässt darüber hinaus erkennen, wo sich die Stromabnehmerwippe 2 in der abgesenkten Position befindet. Die Auflaufhörner 6, 7 sowie die Schleifleiste 3 sind ansatzweise in der Nähe des fahrzeugseitigen Grundrahmens 8. Das Gestänge des Stromabnehmers 1 umfasst in diesem Ausführungsbeispiel einen Oberarm mit zwei Holmen, einer Lenkerstange und einen Unterarm mit einem Holm. Bei der vorliegenden Erfindung kommt es maßgeblich auf die Konfiguration der Bügelanordnung 4 an. Die nachfolgenden Figuren beziehen sich somit auf Bügelanordnungen, wie sie beispielsweise bei einem in Figur 1 dargestellten Stromabnehmer 1 zum Einsatz kommen können.

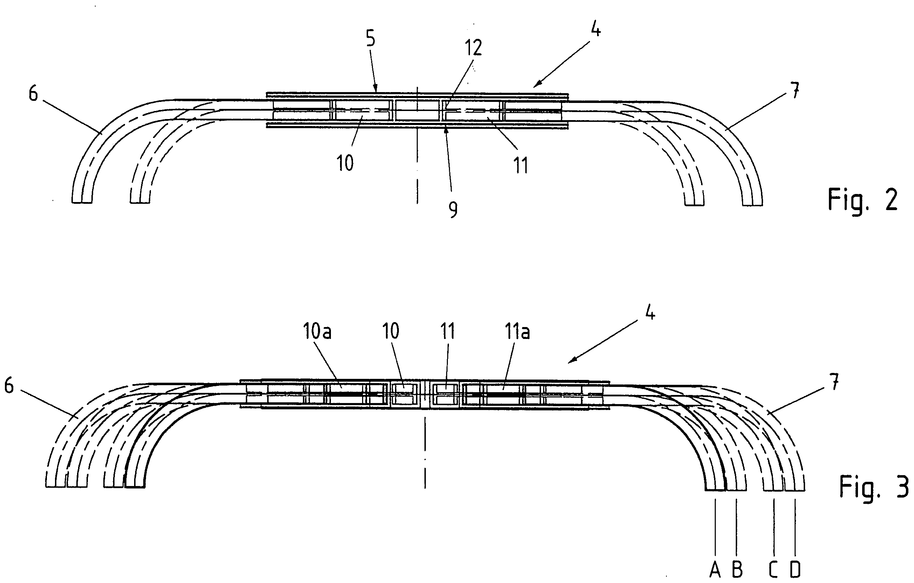

Figur 2 zeigt eine Ausführungsform einer Bügelanordnung 4 mit zwei endseitigen Auflaufhörnern 6, 7, die in entgegengesetzte Richtungen und quer zur Fahrtrichtung verschiebbar sind. Hierzu ist eine in den Mittelteil der Bügelanordnung 4, d.h. in den Bügel 5, eingegliederte Stelleinrichtung 9 vorgesehen. Die Stelleinrichtung 9 besteht aus doppelt wirkenden Kolben-Zylinder-Einheiten 10, 11. Jedem der Auflaufhörner 6, 7 ist je eine Kolben-Zylinder-Einheit 10, 11 zugeordnet. Die in entgegengesetzte Richtungen wirkenden Kolben-Zylinder-Einheiten 10, 11 sind als Differenzialzylinder ausgeführt, d.h. sie sind doppelt wirkend, ohne dass es zu ihrer Rückstellung einer Federkraft wie bei einfach wirkenden Zylindern bedarf. Auf diese Weise wird zum Verlagern der Kolben-Zylinder-Anordnungen eine geringere Verschiebekraft benötigt, da die Verlagerung des Kolbens nicht gegen eine Federkraft erfolgt.

Der Antrieb der Kolben-Zylinder-Einheiten 10, 11 kann mit dem Betriebsfluiddruck des Stromabnehmers 1 erfolgen.

Es ist zu erkennen, dass bei dieser Ausführungsform zwei unterschiedliche Breiten eingestellt werden können. Mit durchgezogener Linie ist eine ausgefahrene Betriebsstellung der Bügelanordnung 4 dargestellt. Mit unterbrochener Linie ist eine eingefahrene Betriebsstellung der Bügel dargestellt. Es ist zu erkennen, dass bei eingefahrener Betriebsstellung ein Kolben 12 entsprechend dem Hubweg des zugehörigen Auflaufhorns 6, 7 näher zur Mitte des Bügels 5 verlagert ist als in ausgefahrener Position. In nicht näher dargestellter Weise sind an den Kolben-Zylinder-Einheiten 10, 11 jeweils zwei Fluidanschlüsse vorgesehen, um einmal den bodenseitigen Raum der doppelt wirkenden Kolben-Zylinder-Einheit 10, 11 und zum anderen den von der Kolbenstange durchsetzten Ringraum, d.h. die Ringseite des Differenzialzylinders, mit Druck zu beaufschlagen, wenn eine Rückstellung der Bügelanordnung 5 in die eingefahrene Betriebsstellung gewünscht wird.

Figur 3 zeigt eine Ausführungsform, bei welcher die Auflaufhörner 6, 7 in insgesamt vier mit A bis D bezeichneten Betriebsstellungen verlagerbar sind. Dies wird dadurch erreicht, dass je Auflaufhorn 6, 7 zwei Kolben-Zylinder-Einheiten 10, 10a, 11, 11a in Reihenschaltung hintereinander geschaltet sind. Wenn keine der Kolben-Zylinder-Einheiten 10, 10a, 11, 11a betätigt wird, befinden sich die Auflaufhörner 6, 7 in der mit A bezeichneten Betriebsstellung. Werden nur die inneren Kolben-Zylinder-Einheiten 10, 11 betätigt, ergibt sich die Betriebsstellung B. Die Betriebsstellung C wird dann eingenommen, wenn lediglich die äußeren Kolben-Zylinder-Einheiten 10a, 11a betätigt werden. Wenn beide Kolben-Zylinder-Einheiten 10, 10a, 11, 11a gleichzeitig betätigt werden, ergibt sich die Betriebsstellung D.

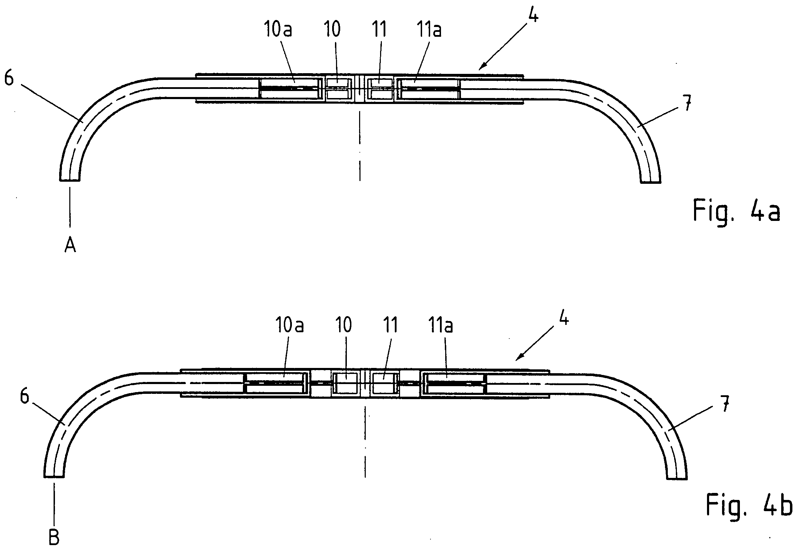

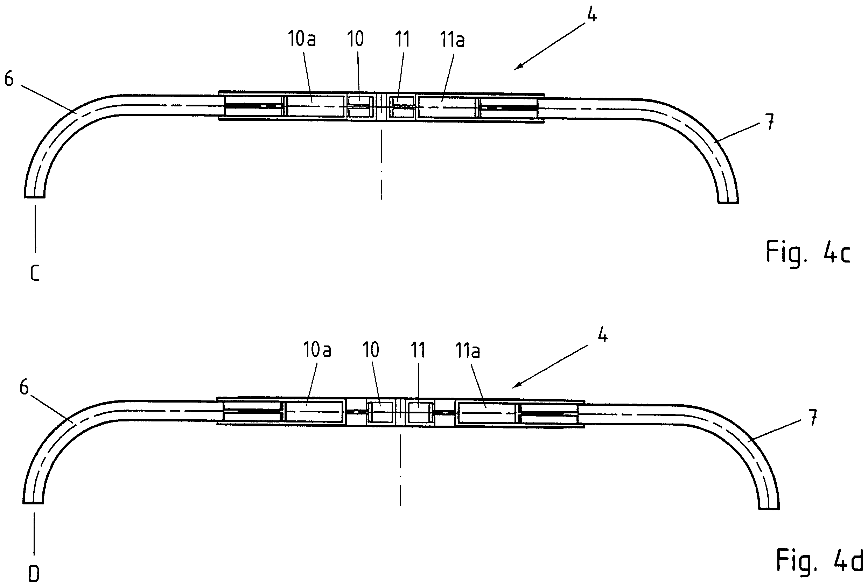

Die Figuren 4a bis 4d verdeutlichen noch einmal die möglichen Schaltungszustände, die in Figur 3 zusammengefasst sind. Figur 4a zeigt dementsprechend die komplett eingefahrene Betriebsstellung A. In Figur 4b sind lediglich die inneren Kolben-Zylinder-Einheiten 10, 11 betätigt worden. Der Hubweg dieser Kolben-Zylinder-Einheiten 10, 11 ist kürzer als der Hubweg der äußeren Kolben-Zylinder-Einheiten 10a, 11a, die erst in den Ausführungsformen gemäß Figuren 4c und 4d betätigt worden sind, und zwar einmal ohne Betätigung der inneren Kolben-Zylinder-Einheiten 10, 11 (Figur 4c), was zur Betriebsstellung C führt, wohingegen in Figur 4d schließlich beide Kolben-Zylinder-Einheiten 10, 10a, 11, 11a betätigt worden sind. Figur 4d zeigt dementsprechend die Betriebsstellung D.

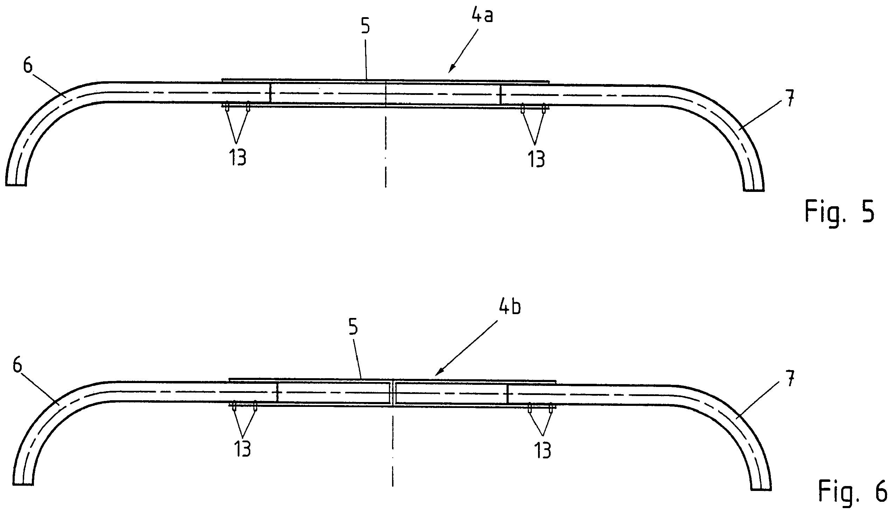

Figur 5 zeigt eine Bügelanordnung 4a, bei welcher auf die Darstellung der Stelleinrichtung verzichtet worden ist. Es ist zu erkennen, dass der mittige Bügel 5 durchgehend gestaltet ist. Das soll verdeutlichen, dass eine zentrale Stelleinrichtung vorgesehen sein kann, die gleichzeitig auf beide Auflaufhörner 6, 7 wirkt. Hierbei kann es sich beispielsweise um einen Gewindetrieb handeln. Es ist aber auch denkbar, eine zentrale Kolben-Zylinder-Einheit vorzusehen, die zwei Kolben besitzt, wobei der zentrale Raum zwischen den beiden Kolben zum Ausfahren der Auflaufhörner 6, 7 druckbeaufschlagt wird. Zum Einfahren der Auflaufhörner 6, 7 können die jeweiligen Ringräume der Kolben-Zylinder-Einheit druckbeaufschlagt werden.

Der Unterschied zu den vorherigen Ausführungsformen besteht aber insbesondere darin, dass Arretierungsmittel 13 vorgesehen sind, welche die Auflaufhörner 6, 7 in der gewünschten Position arretieren können. Die Arretierung kann in Form von Sicherungsstiften ausgebildet sein, die durch Fluiddruck oder Federspannung betätigt werden. Die Arretierung könnte auch elektrisch oder durch magnetische Kräfte erfolgen.

Die Ausführungsform der Figur 6 sieht ebenfalls solche Arretierungsmittel 13 vor. Der Unterschied zur Figur 5 ist, dass anstelle einer zentralen Stelleinrichtung in Anlehnung an die Ausführungsform der Figur 3 jedem Auflaufhorn 6, 7 jeweils wenigstens eine separate Stelleinrichtung zugeordnet ist. Die Trennlinie in der Mittelquerebene der Bügelanordnung 4b soll verdeutlichen, dass es wenigstens zwei Stelleinrichtungen gibt.

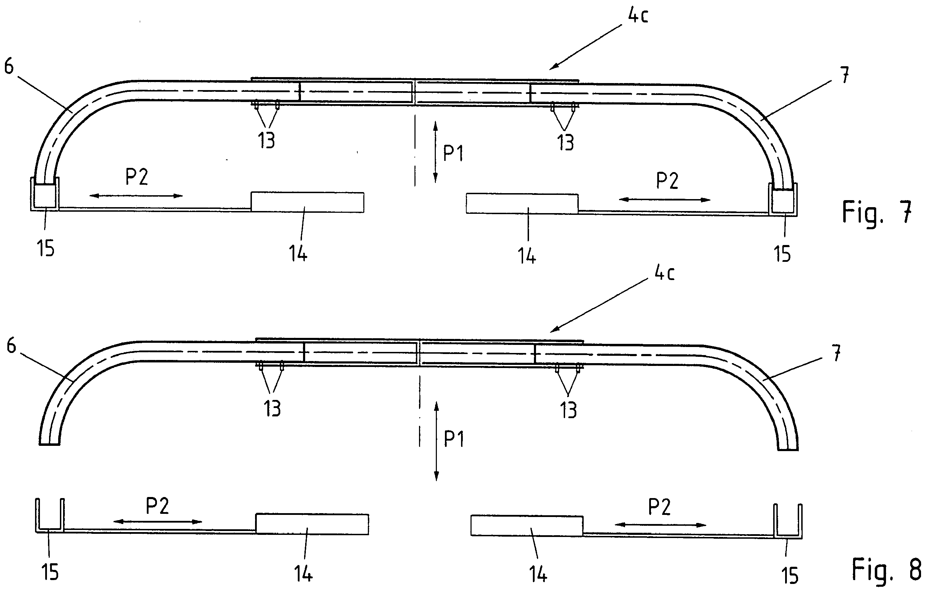

Die Ausführungsformen der Figuren 7 und 8 weisen sowohl die in den Figuren 5 und 6 dargestellten Arretierungsmittel auf als auch Stelleinrichtungen 14, die allerdings extern an der Bügelanordnung 4c angeordnet sind. Die dargestellten Stelleinrichtungen 14 besitzen jeweils ein Koppelmittel 15, hier in Form eines Greifers oder einer Tasche, in welche die unteren, freien Enden der Auflaufhörner 6, 7 einfassen können. Die Stelleinrichtungen 14 befinden sich an dem in Figur 1 dargestellten Grundrahmen 8 des Stromabnehmers 1, so dass die Auflaufhörner 6, 7 nur dann mit den Stelleinrichtungen 14 in Eingriff gelangen, wenn die Stromabnehmerwippe abgesenkt ist.

Diese Stelleinrichtung kann aber auch außerhalb des Stromabnehmers 1 z.B. am Fahrzeugdach angebracht werden. Letzteres hätte den wesentlichen Vorteil die Antriebseinheit der Stelleinrichtung 14 außerhalb des unter Hochspannung stehendem Stromabnehmerteils zu befestigen, so dass für die z.B. elektrische Antriebseinheit keine besonderen Hochspannungsisolierung erforderlich ist. Es wäre ein normaler elektrischer Antrieb mit Standardanforderungen einsetzbar.

Figur 8 zeigt, dass die Bügelanordnung 4c in der Höhe relativ zu den Stelleinrichtungen 14 verlagerbar ist. Der Pfeil P1 zeigt, dass die Bügelanordnung 4c in der Höhe gegenüber der ortsfesten Stelleinrichtung 14 verlagerbar ist. Die Pfeile P2 verdeutlichen, dass der Abstand zwischen den Koppelmitteln 15 entsprechend dem Abstand der Auflaufhörner 6, 7 veränderbar ist. Die Koppelmittel 15, die als auch Stelleingriff oder Greifer bezeichnet werden können, könnten auch noch senkrecht zu der Bewegungsrichtung P2 und P1 verschoben werden, so dass die Koppelmittel 15 nur dann mit den Auflaufhörnern 6 und 7 verbunden sind, wenn dieses explizit gefordert ist. So kann der Stromabnehmer 1 in normaler, abgesenkter Position der Stromabnehmerwippe ohne direkten Kontakt zu dem Koppelmittel 15 stehen. Das Koppelmittel kann auch aus elektrisch isoliertem Material gefertigt sein.

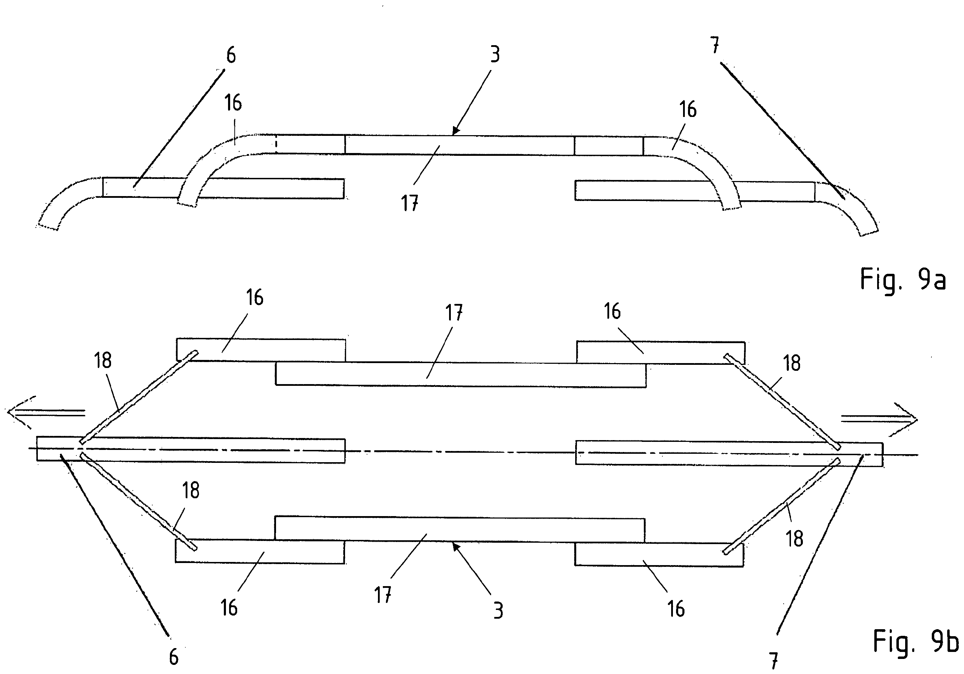

Die Figuren 9a und 9b zeigen einmal in der Seitenansicht und einmal in der Draufsicht eine weitere Ausführungsform eines Stromabnehmers mit verlagerbaren Schleifleistenauflaufhörnern 16. Der Unterschied zu der den vorhergehend beschriebenen Ausführungsformen ist, dass die beiden parallel zueinander angeordneten Schleifleisten 3 endseitig zugeordnete Schleifleistenauflaufhörner 16 aufweisen, welche gegenüber einem Schleifleistenmittelteil 17 in entgegengesetzte Richtungen für eine Breitenverstellung verlagerbar sind. Die Schleifleistenauflaufhörner 16 verlaufen parallel zu dem Schleifleistenmittelteil 17, damit eine Breitenverstellung möglich ist. Bei diesem Ausführungsbeispiel liegen die beiden benachbarten Schleifleistenmittelteile 17 gewissermaßen innen, während die jeweiligen Schleifleistenauflaufhörner 16 außen liegen. Die umgekehrte Anordnung ist ebenso denkbar.

Wesentlich ist, dass die nicht näher dargestellten Stelleinrichtungen, deren Wirkrichtung durch Pfeile verdeutlicht wird und welche auf die Auflaufhörner 6, 7 des Bügel 3 wirken, gleichzeitig auch die Schleifleistenauflaufhörner 16 verlagern. Hierzu sind die Auflaufhörner 7 jeweils über zwei seitlich abgehende Streben 18 mit den Schleifleistenauflaufhörnern 16 verbunden.

### Bezugszeichen:

- 1 -: Stromabnehmer
- 2 -: Stromabnehmerwippe
- 3 -: Schleifleiste
- 4 -: Bügelanordnung
- 4a -: Bügelanordnung
- 4b -: Bügelanordnung
- 4c -: Bügelanordnung
- 5 -: Bügel
- 6 -: Auflaufhorn
- 7 -: Auflaufhorn
- 8 -: Grundrahmen
- 9 -: Stelleinrichtung
- 10 -: Kolben-Zylinder-Einheit
- 10a -: Kolben-Zylinder-Einheit
- 11 -: Kolben-Zylinder-Einheit
- 11a -: Kolben-Zylinder-Einheit
- 12 -: Kolben
- 13 -: Arretierungsmittel
- 14 -: Stelleinrichtung
- 15 -: Koppelmittel
- 16 -: Schleifleistenauflaufhorn
- 17 -: Schleifleistenmittelteil
- 18 -: Strebe

- A-D -: Betriebsstellung
- P1 -: Pfeil
- P2 -: Pfeil

## Patentansprüche

1. Stromabnehmer für ein Schienenfahrzeug zur Kontaktierung mit einem Fahrdraht einer Oberleitung, umfassend eine in ihrer Breite veränderliche Stromabnehmerwippe (2) mit wenigstens einer Schleifleiste (3) und wobei eine Stelleinrichtung (9, 14) von wenigstens einer Kolben-Zylinder-Einheit (10, 10a, 11, 11a) gebildet ist, wobei die wenigstens eine Schleifleiste (3) ihren gegenüberliegenden Enden zugeordnete Schleifleistenauflaufhörner (16) aufweist, welche gegenüber einem Schleifleistenmittelteil (17) der wenigstens einen Schleifleiste (3) in entgegengesetzte Richtungen verstellbar sind, wobei die Schleifleistenauflaufhörner (16) mittels der Stelleinrichtungen (9, 14) für die Auflaufhörner (6, 7) verstellbar sind, **dadurch gekennzeichnet, dass** die Stromabnehmerwippe (2) eine Bügelanordnung (4, 4a, 4b, 4c) besitzt, umfassend einen Bügel (5) mit Auflaufhörnern (6, 7) an seinen Enden, wobei die Auflaufhörner (6, 7) mittels der Stelleinrichtung (9, 14) in entgegengesetzte Richtungen und quer zur Fahrtrichtung verschiebbar sind, wobei die wenigstens eine Kolben-Zylinder-Einheit (10, 10a, 11, 11a) doppelt wirkend und als Differenzialkolben ausgeführt ist, oder wobei die Stelleinrichtung (9, 14) von einer elektromechanischen Antriebseinheit gebildet ist.

2. Stromabnehmer nach Anspruch 1, **dadurch gekennzeichnet, dass** jedem Auflaufhorn (6, 7) jeweils eine eigene Kolben-Zylinder-Einheit (10, 10a, 11, 11a), eine elektromechanische Antriebseinheit oder ein fluiddruckbetriebener Motor zugeordnet ist.

3. Stromabnehmer nach Anspruch 1 oder 2, **dadurch gekennzeichnet, dass** die Verstellung der Auflaufhörner (6, 7) mittels einer beiden Auflaufhörnern (6, 7) gemeinsamen Stelleinrichtung erfolgt.

4. Stromabnehmer nach Anspruch 3, **dadurch gekennzeichnet, dass** die Stelleinrichtung als Gewindetrieb ausgeführt ist, umfassend eine angetriebene Gewindespindel sowie den Auflaufhörnern (6, 7) zugeordnete Spindelmuttern.

5. Stromabnehmer nach einem der Ansprüche 1 bis 3, **dadurch gekennzeichnet, dass** zur Vergrößerung oder Differenzierung des Hubweges der Auflaufhörner (6, 7) mehrere Kolben-Zylinder-Einheiten (10, 10a, 11, 11a) in einer Reihenschaltung angeordnet sind.

6. Stromabnehmer nach Anspruch 5, **dadurch gekennzeichnet, dass** die Hubwege von in Reihe geschalteten Kolben-Zylinder-Einheiten (10, 10a, 11, 11a) unterschiedlich sind.

7. Stromabnehmer nach einem der Ansprüche 1 bis 6, **dadurch gekennzeichnet, dass** Arretierungsmittel (13) vorgesehen sind, mittels welcher die Auflaufhörner (6, 7) in einer ausgefahrenen und/oder einer eingefahrenen Betriebsstellung (A-D) gegenüber dem Bügel (5) festsetzbar sind.

8. Stromabnehmer nach Anspruch 7, **dadurch gekennzeichnet, dass** die Arretierungsmittel (13) elektrisch, magnetisch, durch Federkraft oder fluidisch betätigbar sind.

9. Stromabnehmer nach Anspruch 7 oder 8, **dadurch gekennzeichnet, dass** die Kolben-Zylinder-Einheit (10, 10a, 11, 11a) bei in einer ausgefahrenen und/oder eingefahrenen Betriebsstellung (A-D) festgesetzten Auflaufhörnern (6, 7) druckfrei geschaltet ist.

10. Stromabnehmer nach Anspruch 1 bis 9, **dadurch gekennzeichnet, dass** die Stelleinrichtung (9) in den Bügel (5) integriert ist.

11. Stromabnehmer nach einem der Ansprüche 1 bis 10, **dadurch gekennzeichnet, dass** die Stelleinrichtung (14) außerhalb der Bügelanordnung (4c) angeordnet ist und nur dann mit den Auflaufhörnern (6, 7) in einen Wirkzusammenhang bringbar ist, wenn der Stromabnehmer (1) abgesenkt ist.

12. Stromabnehmer nach Anspruch 11, **dadurch gekennzeichnet, dass** die Stelleinrichtung (14) Koppelmittel (15) zur lösbaren Kopplung mit den Auflaufhörnern (6, 7) besitzt, um diese quer zur Fahrtrichtung zu verlagern.

13. Stromabnehmer nach Anspruch 11 oder 12, **dadurch gekennzeichnet, dass** der Wirkeingriff durch Absenken der Stromabnehmerwippe (2) und/oder durch Verlagerung von Koppelmitteln (15) der Stelleinrichtung (14) erfolgt.

14. Stromabnehmer nach Anspruch 13, **dadurch gekennzeichnet, dass** die Koppelmittel (15) aus einer von der Hubrichtung der Stromabnehmerwippe (2) und der Stellrichtung der Auflaufhörner (6, 7) aufgespannten Querebene heraus verlagerbar sind und nur zum Eingriff mit den Auflaufhörnern (6, 7) in diese Querebene verlagert werden.

15. Stromabnehmer nach einem der Ansprüche 11 bis 14, **dadurch gekennzeichnet, dass** das Koppelmittel (15) und/oder die Stelleinrichtung (14) elektrisch gegenüber dem Stromabnehmer (1) isoliert ist.

## Claims

1. Current collector for a track vehicle for contacting an overhead wire of an overhead contact line, comprising a pantograph head (2) with a variable width having at least one sliding strip (3) and wherein an adjusting device (9, 14) is formed from at least one piston-cylinder-unit (10, 10a, 11, 11a), wherein the at least one sliding strip (3) includes sliding strip run-on horns (16) which are adjustable with respect to a sliding strip middle part (17) of the at least one sliding strip (3) in opposing directions, wherein the sliding strip run-on horns (16) are adjustable by means of the adjusting devices (9, 14) for the run-on horns (6, 7), **characterised in that** the pantograph head (2) has a bracket arrangement (4, 4a, 4b, 4c) comprising a bracket (5) having run-on horns (6, 7) at its ends, wherein the run-on horns (6, 7) by means of the adjusting device (9, 14) are displaceable in opposing directions and transversely to the direction of travel, wherein the at least one piston-cylinder-unit (10, 10a, 11, 11a) is designed as double-acting and as a differential piston, or wherein the adjusting device (9, 14) is formed by an electromagnetic drive unit.

2. Current collector according to claim 1, **characterised in that** to each run-on horn (6, 7) is assigned respectively its own piston-cylinder-unit (10, 10a, 11, 11a), an electromagnetic drive unit or a fluid pressure-driven motor.

3. Current collector according to claim 1 or 2, **characterised in that** the displacement of the run-on horns (6, 7) is obtained by means of an adjusting device shared by both run-on horns (6, 7).

4. Current collector according to claim 3, **characterised in that** the adjusting device is in the form of a thread drive comprising a driven threaded spindle and spindle nuts assigned to the run-on horns (6, 7).

5. Current collector according to any of claims 1 to 3, **characterised in that** in order to enlarge or differentiate the lifting path of the run-on horns (6, 7) several piston-cylinder-units (10, 10a, 11, 11a) are disposed in a series connection.

6. Current collector according to claim 5, **characterised in that** the lifting paths of piston-cylinder units (10, 10a, 11, 11a) wired in series are different.

7. Current collector according to any of claims 1 to 6, **characterised in that** locking means (13) are provided by means of which the run-on horns (6, 7) in an extended and/or a retracted operational position (A-D) are fixable with respect to the bracket (5).

8. Current collector according to claim 7, **characterised in that** the locking means (13) are actuatable electrically, magnetically, by means of spring force or fluidically.

9. Current collector according to claim 7 or 8, **characterised in that** the piston-cylinder-unit (10, 10a, 11, 11a) in the case of run-on horns (6, 7) being fixed in an extended and/or retracted operational position (A-D) is switched pressure free.

10. Current collector according to claim 1 to 9, **characterised in that** the adjusting device (9) is integrated into the bracket (5).

11. Current collector according to any of claims 1 to 10, **characterised in that** the adjusting device (14) is disposed externally to the bracket arrangement (4c) and can only then be brought into an interrelationship with the run-on horns (6, 7) when the current collector (1) is lowered.

12. Current collector according to claim 11, **characterised in that** the adjusting device (14) has coupling means (15) for the releasable coupling with the run-on horns (6, 7) in order to displace these transversely to the direction of travel.

13. Current collector according to claim 11 or 12, **characterised in that** the operative engagement is effected by lowering the pantograph head (2) and/or by displacing coupling means (15) of the adjusting device (14).

14. Current collector according to claim 13, **characterised in that** the coupling means (15) are displaceable out of a transverse plane subtended by the lifting direction of the pantograph head (2) and the adjusting direction of the run-on horns (6, 7) and are displaced only for the engagement with the run-on horns (6, 7) into this transverse plane.

15. Current collector according to any of claims 11 to 14, **characterised in that** the coupling means (15) and/or the adjusting means (14) is isolated electrically with respect to the current collector (1).

## Revendications

1. Pantographe pour véhicule ferroviaire destiné à venir en contact avec un fil de contact d'une caténaire, comprenant un archet de pantographe de largeur variable (2) avec au moins une plaque de frottement (3), et dans lequel un dispositif de réglage (9, 14) est formé d'au moins une unité de piston-cylindre (10, 10a, 11, 11a), dans lequel la au moins une plaque de frottement (3) comporte des cornes de plaque de frottement (16) associés à ses extrémités opposées, qui sont réglables dans des directions opposées par rapport à une partie centrale de plaque de frottement (17) de la au moins une plaque de frottement (3) ; dans lequel les cornes de plaque de frottement (16) sont réglables au moyen des dispositifs de réglage (9, 14) pour les cornes d'archet (6, 7), **caractérisé en ce que** l'archet de pantographe (2) présente un ensemble de palette (4, 4a, 4b, 4c) comprenant une palette (5) avec des cornes d'archet (6, 7) à ses extrémités, dans lequel les cornes d'archet (6, 7), au moyen du dispositif de réglage (9, 14), peuvent être déplacées dans des directions opposées et transversalement à la direction de déplacement, dans lequel la au moins une unité de piston-cylindre (10, 10a, 11, 11a) est à double effet et est conçue comme un piston différentiel, ou dans lequel le dispositif de réglage (9, 14) est formé par une unité d'entraînement électromécanique.

2. Pantographe selon la revendication 1, **caractérisé en ce que** chaque corne d'archet (6, 7) est associée à sa propre unité de piston-cylindre (10, 10a, 11, 11a), une unité d'entraînement électromécanique ou un moteur actionné par pression de fluide.

3. Pantographe selon la revendication 1 ou 2, **caractérisé en ce que** le réglage des cornes d'archet (6, 7) survient au moyen d'un dispositif de réglage commun aux cornes d'archet (6, 7).

4. Pantographe selon la revendication 3, **caractérisé en ce que** le dispositif de réglage est conçu comme un entraînement à vis sans fin, comprenant une broche filetée entraînée et des écrous de broche associés aux cornes d'archet (6, 7).

5. Pantographe selon l'une quelconque des revendications 1 à 3, **caractérisé en ce que** plusieurs unités de piston-cylindre (10, 10a, 11, 11a) sont agencées dans un circuit série pour amplifier ou différencier la course des cornes d'archet (6, 7).

6. Pantographe selon la revendication 5, **caractérisé en ce que** les trajectoires des unités de piston-cylindre (10, 10a, 11, 11a) montées en série sont différentes.

7. Pantographe selon l'une des revendications 1 à 6, **caractérisé en ce que** des moyens d'arrêt (13) sont prévus, au moyen desquels les cornes d'archet (6, 7) peuvent être fixées dans une position de fonctionnement étendue et/ou rétractée (A-D) par rapport à la palette (5).

8. Pantographe selon la revendication 7, **caractérisé en ce que** les moyens d'arrêt (13) sont actionnés électriquement, magnétiquement, par ressort ou par fluide.

9. Pantographe selon la revendication 7 ou 8, **caractérisé en ce que** l'unité de piston-cylindre (10, 10a, 11, 11a) est commutée sans pression par les cornes d'archet (6, 7) fixées dans une position de fonctionnement étendue et/ou rétractée (A-D).

10. Pantographe selon la revendication 1 à 9, **caractérisé en ce que** le dispositif de réglage (9) est intégré dans la palette (5).

11. Pantographe selon l'une des revendications 1 à 10, **caractérisé en ce que** le dispositif de réglage (14) est agencé à l'extérieur de l'ensemble de palette (4c) et peut être amené en relation de fonctionnement uniquement avec les cornes d'archet (6, 7) lorsque le pantographe (1) est abaissé.

12. Pantographe selon la revendication 11, **caractérisé en ce que** le dispositif de réglage (14) comporte des moyens de couplage (15) pour un couplage de manière amovible aux cornes d'archet (6, 7), afin de les déplacer transversalement par rapport à la direction de déplacement.

13. Pantographe selon la revendication 11 ou 12, **caractérisé en ce que** la mise en prise survient par abaissement de l'archet de pantographe (2) et ou par déplacement des moyens de couplage (15) du dispositif de réglage (14).

14. Pantographe selon la revendication 13, **caractérisé en ce que** les moyens de couplage (15) peuvent être déplacés à l'extérieur d'un plan transversal délimité par la direction de course de l'archet de pantographe (2) et la direction de réglage des cornes d'archet (6, 7), et sont déplacés dans ce plan transversal uniquement pour une mise en prise avec les cornes d'archet (6, 7).

15. Pantographe selon l'une des revendications 11 à 14, **caractérisé en ce que** les moyens de couplage (15) et/ou le dispositif de réglage (14) est/sont isolé(s) électriquement du pantographe (1).
